# EUROPÄISCHE PATENTANMELDUNG

(11) **EP 1 228 803 A1**
(43) Veröffentlichungstag der Anmeldung: **07.08.2002**
(21) Anmeldenummer: 02001180.5
(22) Anmeldetag: 29.01.2002
(51) Int. Cl.: B01J 37/00

(54) **Kern/Mantel-Katalysatorformkörper**

(30) Priorität: 31.01.2001 DE 10104226
(71) Anmelder: BASF AKTIENGESELLSCHAFT, 67056 Ludwigshafen (DE)
(72) Erfinder: Hesse, Michael, Dr., 67549 Worms (DE); Anderlik, Rainer, Dr., 69126 Heidelberg (DE); Fritz, Hans-Gerhard, Prof., Dr., 73066 Uhingen (DE); Hammer, Jochen, 70329 Stuttgart (DE)
(74) Vertreter: Isenbruck, Günter, Dr.

(57) **Zusammenfassung**

Der Kern/Mantel-Katalysatorformkörper mit einem Kern aus einem anorganischen Trägermaterial und einem Mantel aus einem katalytisch aktiven Material ist herstellbar durch
- Coextrusion einer wässrigen Formmasse, die das Trägermaterial oder einen Vorläufer davon enthält, und einer wässrigen Formmasse, die das katalytisch aktive Material oder einen Vorläufer davon enthält,
- nachfolgendes Trocknen des Coexdrudats und
- nachfolgendes Kalzinieren des getrockneten Coexdrudats.

## Beschreibung

Die Erfindung betrifft Kern/Mantel-Katalysatorformkörper, Verfahren zu ihrer Herstellung und ihre Verwendung in der Katalyse von Reaktionen organischer Verbindungen.

Die vorliegende Erfindung betrifft insbesondere einen mehrschichtigen keramischen Formkörper, der aus mindestens zwei konzentrisch angeordneten Zonen unterschiedlicher Zusammensetzungen besteht, wobei es sich bei mindestens einer Zone um ein katalytisch aktives Material handelt.

Für viele chemische Umsetzungen werden Katalysatoren zur Verbesserung der Ausbeute und Raumzeitausbeute der Reaktion eingesetzt. In den meisten Fällen wird dabei der Katalysator als Formkörper in einem Festbettreaktor zur Anwendung gebracht, durch welchen dann die Edukte geleitet werden. Als Formkörper werden Stränge, Kugeln, Tabletten oder sonstige Agglomerate eingesetzt. Diese Formkörper müssen eine Mindeststabilität gegenüber mechanischen Belastungen aufweisen, da sie sonst im Reaktor unter Reaktionsbedingungen zerfallen würden. Dies ist ein Grund, warum solche Formkörper nur selten allein aus der katalytisch aktiven Masse bestehen, sondern zusätzlich meist eine mechanisch stabilisierende Komponente, den Träger, enthalten. Der Träger erfüllt häufig auch noch die Aufgabe, eine bestimmte Porenstruktur sicherzustellen, die einen schnellen Stofftransport der Edukte und Produkte in den Formkörper hinein und aus ihm heraus gewährleistet.

Zur Herstellung dieser Art von Katalysatoren gibt es diverse Verfahren. So kann z. B. ein vorhandener Formkörper aus Trägermaterial mit einer Lösung der katalytisch aktiven Masse oder einer Vorstufe davon getränkt werden. Bei dieser Tränkung stellen sich, je nach Wechselwirkung zwischen Träger und Tränklösung, bestimmte Profile der Aktivkomponenten über den Querschnitt des Formkörpers ein. Dieses Profil ist in den meisten Fällen schlecht gezielt einzustellen bezüglich der Ausdehnung der Phasen und beinhaltet praktisch immer Gradienten der Aktivkomponentenkonzentration entlang des Eindringweges der Aktivkomponentenvorstufe. Des weiteren kann der Träger schon vor der Formgebung mit der Aktivkomponente zusammengebracht werden. Dann findet im Prozess der Formkörperherstellung im allgemeinen keine gezielte Einstellung eines Profils statt, sondern es wird eine homogene gleichmäßige Verteilung der Aktivkomponente erreicht.

Eine weitere Möglichkeit der Herstellung ist die Aufbringung einer Schicht aus Aktivkomponenten auf einen meist unporösen keramischen Träger, wobei ein Pulver zusammen mit einer Lösung oder einer Suspension auf den Trägerformkörper aufgebracht wird. Dabei lässt sich eine einigermaßen gut definierte Schichtdicke an Aktivkomponente herstellen. Nachteil dieser Art der Herstellung ist allerdings die geringe mechanische Haftfestigkeit der aus Pulver entstandenen Schicht auf dem Träger. So wird diese Art von Katalysatoren nur bei speziellen Partialoxidationen im Gasphasenbetrieb eingesetzt. Bei höheren mechanischen Beanspruchungen werden die aufgebrachten Schichten leicht abgelöst.

Werden Reaktionen katalysiert, bei denen Zwischenstufen oder Endprodukte entstehen, die bei einer längeren Verweilzeit in der Nähe katalytisch reaktiver Zentren unter der Bildung unerwünschter, ausbeutemindernder Nebenprodukte weiterreagieren, so muß der Katalysatorformkörper so strukturiert werden, daß diese längeren Verweilzeiten umgangen werden. Eine Möglichkeit dazu ist der Einsatz von Formkörpern mit nur einer dünnen Schicht aus katalytisch aktivem Material. Methoden zur Einstellung solcher Schichten oder Profile sind oben beschrieben. Alle diese Methoden haben aber Nachteile. Entweder ist das Profil, bzw. die Schichtdicke nicht exakt einzustellen, oder die aufgebrachte Schicht ist nicht ausreichend mechanisch stabil. Außerdem sind alle Verfahren aufwendig in der Herstellung dieser Katalysatoren.

Es bestand nun die Aufgabe, einen mechanisch stabilen Formkörper mit einer definierten Schichtdicke an katalytisch aktivem Material auf einem inerten Trägerkern bereitzustellen, sowie ein Verfahren zu seiner Herstellung.

Die Aufgabe wird erfindungsgemäß gelöst durch einen Kern/Mantel-Katalysatorformkörper mit einem Kern aus einem anorganischen Trägermaterial und einem Mantel aus einem katalytisch aktiven Material, herstellbar durch
- Coextrusion einer wässrigen Formmasse, die das Trägermaterial oder einen Vorläufer davon enthält, und einer wässrigen Formmasse, die das katalytisch aktive Material oder einen Vorläufer davon enthält,
- nachfolgendes Trocknen des Coexdrudats und
- nachfolgendes Kalzinieren des getrockneten Coexdrudats.

Vorzugsweise katalysiert dabei das katalytisch aktive Material die Hydrierung, Dehydrierung, Oxidation, Isomerisierung oder Polymerisation oder Additions-, Substitutions- oder Eliminierungsreaktionen organischer Stoffe. Das katalytisch aktive Material enthält vorzugsweise Metalle oder Metallverbindungen der 5. bis 8. Nebengruppe des Periodensystems, der Gruppen IB oder IIB, der Lanthaniden, der Elemente Sn, Pb, As, Sb, Bi, Se oder Te oder Mischungen davon.

Diese Aufgabe wird erfindungsgemäß insbesondere dadurch gelöst, daß der Formkörper aus zwei Reaktionsmischungen so hergestellt wird, daß die beiden Mischungen über ein spezielles Coextrusionswerkzeug konzentrisch extrudiert werden (d. h. idealerweise in Zylinderform mit einer anliegenden röhrenförmigen Hülle). Dabei wird die Masse für den Kern des Extrudats hauptsächlich aus einem in der gegebenen zu katalysierenden Reaktion inerten Trägermaterial bestehen, und die Masse für die äußere Schicht bzw. die äußeren Schichten wird eine Aktivkomponente bzw. deren Vorläufer enthalten.

Keramische, durch Coextrusion hergestellte Formkörper in Form eines Coextrudats, bei dem auf einen zylindrischen Kern ein aus Katalysatormaterial bestehender dünnwandiger Mantel formschlüssig aufextrudiert wird, sind bis heute nicht bekannt.

Um keramische Pulver zu Formkörpern extrudieren zu können, werden dem Pulver in einem Compoundierungsschritt Additive zugeführt, welche der Formmasse eine gewisse Bildsamkeit verleihen, die wiederum Voraussetzung für das sich anschließende Formgebungsverfahren ist. Das Plastifiziermittel sollte nach Abschluß der Formgebung möglichst rückstandslos aus dem hergestellten Formkörper entfernbar sein, da bereits geringe Anteile an Fremdstoffen die katalytischen Eigenschaften seiner Mantelschicht beeinträchtigen. Um einen formstabilen Formkörper zu erhalten, ist es weiterhin vorteilhaft, daß den Formmassen Bindemittel bzw. sogenannte Brückenbildner zugegeben werden, welche während des abschließenden Kalzinierprozesses die Ausbildung von Feststoffbrücken ermöglichen. Alternativ oder zusätzlich kann das zu extrudierende Pulver auch durch Kontakt mit Säuren oder Basen peptisiert werden, wobei sich an den Teilchenoberflächen reaktive Gruppen bilden, die dann in einem nachgeschalteten Temperungsschritt durch Bildung von Feststoffbrücken für eine erhöhte Festigkeit des Formkörpers sorgen.

Die wässrige Formmasse, die das Trägermaterial oder einen Vorläufer davon enthält, enthält vorzugsweise ein Gemisch aus

| | |
|---|---|
| 10 bis 30 Gew.-% | mindestens eines wasserlöslichen Bindemittels, |
| 25 bis 50 Gew.-% | mindestens eines anorganischen Trägermaterials oder Vorläufers davon, |
| 2 bis 20 Gew.-% | mindestens eines Peptisierungsmittels, |
| 1 bis 5 Gew.-% | mindestens eines Plastifiziermittels, |
| 20 bis 60 Gew.-% | Wasser, |

wobei die Gesamtmenge der Inhaltsstoffe 100 Gew.-% ergibt.

Die wässrige Formmasse, die das katalytisch aktive Material oder ein Vorläufer davon enthält, enthält vorzugsweise ein Gemisch aus

| | |
|---|---|
| 10 bis 30 Gew.-% | mindestens eines wasserlöslichen Bindemittels, |
| 0 bis 20 Gew.-% | mindestens eines anorganischen Trägermaterials oder Vorläufers davon |
| 10 bis 40 Gew.-% | mindestens eines katalytisch aktiven Materials oder eines Vorläufers davon, |
| 2 bis 20 Gew.-% | mindestens eines Peptisierungsmittels, |
| 1 bis 5 Gew.-% | mindestens eines Plastifiziermittels, |
| 0,5 bis 2 Gew.-% | mindestens eines Gleitmittels, |
| 20 bis 60 Gew.-% | Wasser, |

wobei die Gesamtmenge der Inhaltsstoffe 100 Gew.-% ergibt.

Vorzugsweise zeigen dabei die zur Herstellung eingesetzten Formmassen im wesentlichen das gleiche Schwindungsverhalten beim Trocknen.

Als Trägermaterialien können vorzugsweise Oxide, Hydroxide oder Carbonate der Elemente B, Al, Ga, Si, Ti, Zr, Zn, Mg oder Ca oder Mischungen derselben eingesetzt werden. Ebenfalls als Trägermaterial eignen sich Aktivkohle, Graphit oder anorganische Nitride oder Carbide, oder Mischungen derselben. Ebenso ist es möglich, Verbindungen zu verwenden, die nach einer geeigneten thermischen Behandlung die o.g. Stoffe ergeben ("Vorläufer").

Bei der katalytisch aktiven Masse handelt es sich vorzugsweise um eine Katalysatormasse, die zur Hydrierung, Oxidation, Isomerisierung oder Polymerisation organischer Stoffe verwendet werden kann. Diese katalytisch aktiven Massen können rein oder verdünnt mit anderen Stoffen, wie den genannten Trägermaterialien der Extrusion zugeführt werden. Katalysatormassen, die für die genannten Reaktionen geeignet sind, sind vorzugsweise Metalle oder Metallverbindungen der 5. bis 8. Nebengruppe des Periodensystems, sowie der Gruppen IB oder IIB. Beispielhaft zu nennen sind Verbindungen der Elemente V, Nb, Ta, Cr, Mo, W, Mn, Re, Fe, Co, Ni, Cu, Zn, Ru, Rh, Pd, Ag, Os, Ir, Pt und Au. Auch Verbindungen der Lanthaniden sowie der Elemente Sn, Pb, As, Sb, Bi, Se und Te sind zu nennen.

Sowohl die Materialien der Trägerschicht, als auch die der katalytisch aktiven Schicht, können, um z.B. in prinzipiell bekannter Weise Nebenreaktionen zu verhindern, Verbindungen der Alkalielemente sowie der oben nicht genannten Erdalkalielemente als Moderatoren enthalten.

Als Plastifizier- und Fließstoffe werden vorzugsweise Methylcellulosen oder ihre Derivate eingesetzt. Besonders bevorzugt ist als Plastifiziermittel Methylhydroxypropylcellulose einzusetzen. Dieses Plastifiziermittel ist in Wasser löslich und bildet eine Liquidphase, in welche die Keramikpartikel eingebunden werden. Je höher der Anteil an Plastifiziermittel, bezogen auf die zugesetzte Wassermenge, desto höher wird die Viskosität und die Fließgrenze des Compounds. Diese Eigenschaft ist vor allem bei der Herstellung von Wabenkörpern von Bedeutung, da die Wabenkörper nach Verlassen des Extrusionswerkzeugs formstabil bleiben müssen. Die Methylhydroxypropylcellulose MHPC 2000 P von Aqualon initiiert beispielsweise in einer 2 %igen wässrigen Lösung eine Viskosität von 20.000 bis 27.500 mPas. Bei Verwendung von Methylcellulosen als Plastifiziermittel wird weiterhin das Fließ- und Deformationsverhalten der Reaktionsmischungen positiv beeinflußt. So wird zum Beispiel der sogenannte Einlaufdruckverlust deutlich gesenkt, woraus ein geringerer Gesamtdruckabfall entlang des Werkzeugs resultiert. Da die erfindungsgemäßen Formkörper im Grünzustand keine sehr hohe Formstabilität aufweisen müssen, wird die Methylhydroxypropylcellulose besonders bevorzugt nur in geringen Anteilen von 4 bis 8 % zur Verminderung des Einlaufdruckverlustes, sowie zur Anhebung der elastischen Eigenschaften der Formmassen zugesetzt.

Die Reaktionsmischung des Mantels beinhaltet weiterhin als Gleitmittel vorzugsweise Wachsemulsionen und/oder Fettsäuremischungen. Mit diesen kann die Wandreibung verringert werden sowie die rheologische Feinabstimmung der erfindungsgemäßen Formmassen vorgenommen werden.

Als Bindemittel werden erfindungsgemäß bevorzugt anorganische Oxide und/oder Hydroxide eingesetzt, die unter den Extrusionsbedingungen sehr feinteilig dispergiert werden können und beim nachfolgenden Trocknungs- und Temperungsschritt durch Ausbildung von Feststoffbrücken zur Erhöhung der mechanischen Festigkeit der Extrudate führen. Beispiele geeigneter Bindemittel sind Böhmit (AlOOH), Sole von SiO₂ (Ludox®) oder TiO₂, oder/und Kieselsäureester verschiedener Alkohole.

Die erfindungsgemäß eingesetzten Formmassen weisen vorzugsweise eine solche Zusammensetzung auf, die sie extrusionsfähig macht. Dabei sollte das Extrusionsverhalten der beiden Komponenten vorzugsweise aufeinander abgestimmt sein. Beispielsweise können beide Formmassen ein ähnliches Extrusionsverhalten zeigen.

Damit der erfindungsgemäße Formkörper technisch eingesetzt werden kann, sollte der katalytisch aktive Mantel dauerhaft auf dem Kern haften. Stoff-, funktions- und verfahrensbedingt sollen die Liquidphase und das Plastifiziermittel wieder aus dem Formkörper entfernt werden. Die Entfernung der Liquidphase und des Plastifiziermittels bewirkt eine zum Teil beträchtliche Schwindung des keramischen Coextrudats von bis zu 15 %. Das Maß der Schwindung ist dabei in hohem Maße von der Rezeptierung abhängig. Die Schwindung sollte für beide Formmassen bei der Herstellung eines qualitativ hochwertigen keramischen Coextrudats weitgehend, nahezu oder ganz identisch sein. Die Formulierungen der den Formkörper bildenden Formmassen sollten demnach derart aufeinander abgestimmt sein, daß die Schwindungsmaße beider Formmassen nahezu identisch sind, um eine besonders dauerhaft formschlüssige Haftung des Mantels auf dem Kern zu erreichen.

Das Maß für die Schwindung einer Reaktionsmischung wird häufig durch die Partikelgeometrie, die Feststoffkomponenten, sowie durch den Anteil der Liquidphase bestimmt. Bei der Partikelgeometrie sind die Partikelgröße und die Partikelgrößenverteilung von Bedeutung. Weiterhin sollten die jeweiligen Feststoffanteile berücksichtigt werden. Vorzugsweise sind diese Parameter für die beiden Formmassen nahezu oder völlig identisch.

Für die Herstellung der erfindungsgemäßen Formkörper werden mindestens zwei unterschiedliche Reaktionsmischungen benötigt, nämlich eine für den zylindrischen Kern und die zweite für den den Katalysator enthaltenden Mantel. Bei der Reaktionsmischung für den Kern beträgt der Bindemittelanteil bevorzugt zwischen 15 und 25 Gew.-%. Der Trägeranteil liegt bevorzugt zwischen 35 und 42 Gew.-%, das Peptisierungsmittel wird bevorzugt mit einem Anteil von etwa 4 bis 14 Gew.-% und das Plastifiziermittel bevorzugt mit einem Anteil von etwa 1 bis 3 Gew.-%, jeweils bezogen auf die gesamte Reaktionsmischung, in die Formulierung eingebracht. Der Rest ist Wasser. Die Feststoffkomponenten können in unterschiedlichen Partikelgrößen vorliegen.

Die Reaktionsmischung des Mantels enthält das Bindemittel in einem bevorzugten Anteil von etwa 15 bis 21 Gew.-%, den Träger in einem bevorzugten Anteil von etwa 0 bis 16 Gew.-%, den Katalysator in einem bevorzugten Anteil von etwa 15 bis 31 Gew.-%, das Peptisierungsmittel in einem bevorzugten Anteil von etwa 5 bis 15 Gew.-%, das Plastifiziermittel in einem bevorzugten Anteil von etwa 1 bis 3 Gew.-% und das Gleitmittel in einem bevorzugten Anteil von 0,5 bis 1,5 Gew.-%, jeweils bezogen auf die gesamte Reaktionsmischung. Der Rest ist Wasser. Die Feststoffkomponenten können auch hier in unterschiedlichen Partikelgrößen vorliegen. Bei Verwendung derartiger Reaktionsmischungen zur Herstellung des erfindungsgemäßen Formkörpers werden Formkörper mit herausragenden katalytischen und mechanischen Eigenschaften erhalten.

Die Erfindung betrifft weiterhin ein Verfahren zur Herstellung des erfindungsgemäßen Formkörpers, welcher aus zwei Reaktionsmischungen besteht, die Träger, Katalysatormaterial, Bindemittel, Plastifiziermittel und Gleitmittel enthalten. Dabei werden die angegebenen Verfahrensschritte durchgeführt. Der erfindungsgemäße Formkörper besteht vorzugsweise aus einem zylinderförmigen Kernstrang mit einem Durchmesser von bevorzugt 1 bis 8, vorzugweise 2,5 bis 5,0 mm, auf den eine dünne Mantelschicht mit einer Wanddicke von bevorzugt 0,1 bis 1,0 mm aufextrudiert wird. Während der Kernstrang für die Festigkeit des Coextrudats sorgt, ist der dünnere Mantel für die Funktionalität des Coextrudats verantwortlich.

Das Verfahren zur Herstelung des erfindungsgemäßen Formkörpers läßt sich in folgende Teilschritte untergliedern;
- Aufbereitung der Reaktionsmischungen,
- Formgebung mittels eines Coextrusionsverfahrens,
- Trocknung der Coextrudate und
- Kalzinierung der getrockneten Coextrudate.

Die Aufbereitung der Reaktionsmischung des Mantels und Kerns erfolgt vorzugsweise in einem Laborkneter, der mit zwei gegensinnig drehenden Sigmaschaufeln bestückt ist. Die Komponenten werden dabei batchweise im Knettrog vorgelegt und solange gemischt, bis eine bildsame Formmasse entsteht, die dann zu den erfindungsgemäßen Formkörpern urgeformt bzw. verstrangt werden kann. Eine kontinuierliche Aufbereitung der Reaktionsmischungen in einem Zweischneckenkneter (ZSK) ist gleichfalls möglich.

Die Formgebung des erfindungsgemäßen Formkörpers wird mittels eines Coextrusionsverfahrens durchgeführt. Gemäß dem Stand der Technik wird bislang kein derartiges Formgebungsverfahren mit keramischen Materialien praktiziert. Stand der Technik bei Coextrusionsverfahren ist die Verarbeitung von Polymerschmelzen. Bei dem Coextrusionsverfahren werden dabei die von mehreren Extrudern gelieferten Schmelzeströme in einem Werkzeug so zusammengeführt, daß sich der gewünschte Schichtenaufbau ergibt. Kombinationen mit bis zu sieben Schichten gehören bei Folien oder Hohlkörpern zum Stand der Technik.

Die Coextrusion von keramischen Formmassen unterscheidet sich von der Mehrschichtextrusion von Thermoplastschmelzen in einer Reihe von Punkten. Die von zwei Extrudern gelieferten Massenströme werden in einem Coextrusionswerkzeug so zusammengeführt, daß sich der beschriebene Schichtenaufbau ergibt. Für die Förderung der Mantelmasse wird vorzugsweise ein Kolbenextruder und für die Kernmasse vorzugsweise ein Einschneckenextruder verwendet. Es sind prinzipiell aber auch zwei Einschneckenextruder oder Zweischneckenextruder möglich. Die wesentlichen Unterschiede zu vorbekannten Coextrusionsverfahren organischer Massen sind in dem Aufbau und in den rheologischen Eigenschaften der erfindungsgemäßen Formmassen zu sehen. Im Gegensatz zu den organischen Polymerschmelzen handelt es sich bei den erfindungsgemäßen Formmassen um hochgefüllte und deshalb sehr hochviskose Systeme mit Fließgrenze, die bei Umgebungstemperatur verarbeitet werden. Diese Systeme erfordern im Hinblick auf ihr spezielles Fließverhalten im Werkzeug und insbesondere im Hinblick auf die Bindenahtbildung an Zusammenflußstellen eine spezielle Werkzeugauslegung. Aufgrund des plastischen Deformations- und Fließverhaltens der Formmassen sind die Formulierungen der Reaktionsmischungen neben der Werkzeugauslegung wichtig für das Gelingen der Coextrusion. Da der Werkzeugwiderstandsbeiwert für den Ausformbereich des Mantels deutlich größer ist als der des geometrisch einfachen Ausformbereichs des Kerns, muß der erfindungsgemäßen Reaktionsmischung des Mantels Gleitmittel zugefügt werden.

Beim Coextrusionswerkzeug handelt es sich vorzugsweise um ein Pinolenwerkzeug, wie es in modifizierter Form auch bei der Rohr- und Blasfolienextrusion mit Polymerschmelzen eingesetzt wird. Das Coextrusionswerkzeug soll in der Lage sein, zwei keramische Formmassen so umzuformen, daß in einem Prozeß auf einen zylindrischen Kern eine dünne Mantelschicht aufextrudiert wird. Dabei werden vorzugsweise Einschneckenextruder (Kern) und Kolbenextruder (Mantel) kombiniert.

Ein wichtiges Bauteil des Coextrusionswerkzeugs ist der Pinolendorn, welcher das Masseverteilersystem trägt. Während die vom Einschneckenextruder angelieferte Kernformmasse direkt durch den inneren Massekanal des Pinolendorns zur Düse geleitet wird, wird die vom Kolbenextruder angelieferte Mantelformmasse um 90° umgelenkt. Die umgelenkte Mantelmasse wird dann über einen Masseverteilerkanal, der in die Pinole eingearbeitet ist, um den Pinolendorn herumgeführt. Das im Drosselfeld über den ganzen Pinolenumfang gleichmäßige Strömungsprofil trifft im Bereich der Austrittsdüse auf die Kernmasse. Im letzten Teilstück der Austrittsdüse wird dann der Mantel formschlüssig auf den Kern gefügt.

Das Coextrusionswerkzeug ist am Ausformbereich so gestaltet, daß trotz des komplexen nichtlinear plastischen Fließverhaltens der Formmassen eine homogene und über den Umfang geschlossene Außenschicht mit konstanter Wanddicke entsteht. In diesem Zusammenhang ist neben der derzeit verwendeten Einzelpinole auch eine Doppel- oder Mehrfachpinole denkbar. Bei diesen Werkzeugen werden der Verteilerkanal und der nachgeschaltete Drosselspalt bzw. -feld derart geometrisch ausgelegt, daß am Düsenaustrittsspalt der Pinole, wo die beiden Massenströme zusammentreffen, am ganzen Umfang eine einheitliche mittlere Strömungsgeschwindigkeit vorliegen muß.

Für die Auslegung des Masseverteilerkanals werden die charakteristischen rheologischen Kenndaten der Formmassen zugrundegelegt. Zur Ermittlung der rheologischen Kenndaten werden mit Hilfe eines Hochdruckkapillarrheometers die Fließkurven der Formmassen erstellt. Als rheologische Zustandsgleichung wird dabei der Potenzansatz von OstwalddeWaele verwendet, da sich dieser Ansatz zur Beschreibung von nichtlinearen Casson-Medien für 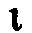 > 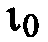 bewährt hat. Bei der Berechnung des Masseverteilerkanals kommt dem Fließexponent m besondere Bedeutung zu, da er ein Maß für die Strukturviskosität der Formmassen ist. Es hat sich gezeigt, daß durch die Annahme eines hohen Fließexponenten m im Bereich von 5 ≤ m ≤ 10 eine gute Annäherung für die Auslegung des Masseverteilerkanals bei der Modellierung getroffen werden kann.

Weitere wichtige Konstruktionsdetails sind die Zentrierung der Austrittsdüse und die Zusammenflußstelle der Formmassen.

Die Zusammenflußstelle der Formmassen sollte so konstruiert sein, daß zwischen Kernbohrung und Austrittsbohrung ein möglichst geringer Abstand besteht und die Mantelformmasse simultan mit der Kernformmasse in die Austrittsbohrung fließt. Ein weiterer wichtiger Punkt für die Qualität des Coextrudats ist die Zentrierung der Austrittsbohrung zum Pinolensystem. Eine schon geringe Abweichung im Bereich von 0,2 mm führt dazu, daß der Mantel nicht mehr konzentrisch zum Kern angeordnet ist. Die Düsenaustrittsbohrung muß einen hinreichend großen Werkzeugwiderstand aufweisen, damit sich der Mantel fest mit dem Kern verbindet. Ein hoher Druck im Austrittsdüsenbereich ist insbesondere auch wichtig, um die Mantelmassen an der Bindenahtstelle fest zu verbinden.

Allgemein sollte bei hochviskosen Formmassen mit Fließgrenzen darauf geachtet werden, daß keine Toträume vorhanden sind, in denen Material stagnieren kann, wodurch sich unkontrollierte Fließkanäle ausbilden. Hierzu zählen vor allem Umlenkstellen, Querschnittsverengungen und -erweiterungen. Besonders Querschnittserweiterungen sind hier anfällig und deshalb zu vermeiden. Bei Querschnittsverengungen sollte ein möglichst spitzer Einlaufwinkel von maximal 30° realisiert werden.

Im Unterschied zur Coextrusion von Polymerschmelzen, bei der das Coextrudat nach dem Erkalten maßtreu ist und normalerweise keine Materialveränderungen mehr stattfinden, durchläuft das keramische Coextrudat nach der Formgebung verfahrensbedingt die Arbeitsschritte der Trocknung und Kalzinierung, bei welchen die Liquidphase, das Plastifiziermittel und die organischen Additive aus dem Extrudat entfernt werden, sowie das Bindemittel die Funktion eines Brückenbildners übernimmt und seine Festigkeit entfaltet. Aufgrund des Entzugs der Liquidphase im Zuge der Trocknung schwindet das Extrudat um bis zu 15 %. Für diesen Verfahrensschritt sind deshalb die Zusammensetzungen der jeweiligen Reaktionsmischungen von Mantel und Kern wichtig. Damit keine Spannungen zwischen Kern und Mantel bei der Schwindung auftreten, werden beide Reaktionsmischungen vorzugsweise hinsichtlich ihres Schwindungsverhaltens genau aufeinander abgestimmt. Die Trocknung sollte vorzugsweise über den ganzen Umfang des erfindungsgemäßen Formkörpers gleichmäßig und schonend bei vorzugsweise ca. 60 bis 120°C erfolgen. Nach der Trocknung werden die Extrudate bei vorzugsweise 400 bis 1200°C kalziniert, wobei das Plastifiziermittel und das Gleitmittel entfernt werden und das Bindemittel Feststoffbrücken ausbildet.

Die Erfindung wird durch die nachstehenden Beispiele näher erläutert.

### Beispiele

In den folgenden Beispielen wird das Methylcellulosederivat MHPC 20000 P (von Aqualon) als Plastifiziermittel verwendet. Als Bindemittel wird ein Aluminiumhydroxidhydrat Pural® SB (von Condea) verwendet, das zwischen ca. 300 und 500°C zu γ-Al₂O₃ dehydriert. Weiterer Bestandteil der Reaktionsmischungen ist eine 20 %ige Ameisensäure, die zusätzlich zur Plastifizierung sowie zur Verbesserung der Festigkeit des Bindemittels eingesetzt wird. Für den Mantel wird weiterhin eine Fettsäure mit nichtionischem Emulgator Zusoplast® 126/3 (von Zschimmer & Schwarz) als Gleitmittel verwendet.

### Beispiel 1

Als Katalysatormasse wird ein CuO/Al₂O₃ Pulver mit 50 Gew.-% CuO eingesetzt, welches durch Fällung der Komponenten, Filtration, Anmaischen der Filterpaste und anschließendes Versprühen der Maische hergestellt ist.

Die Reaktionsmischung für die Herstellung des Kerns des erfindungsgemäßen Formkörpers aus porösem Aluminiumoxid beinhaltet
- 150 g Aluminiumoxidpulver Puralox® (von Condea) gemahlen mit einer Partikelgröße von ca. 5 µm,
- 100 g Aluminiumoxidhydroxydhydrat Pural®,
- 7,5 g Methylhydroxypropylcellulose MHPC 20000 P, und
- 170 g 20 %ige Ameisensäure.

Die Reaktionsmischung für die Herstellung des Mantels des erfindungsgemäßen Formkörpers aus porösem Aluminiumoxid und Katalysatormaterial beinhaltet
- 96 g Kupferkatalysator R3-18,
- 72 g Aluminiumoxidpulver Puralox® ungemahlen mit einer Partikelgröße von ca. 60 bis 150 µm,
- 72 g Aluminiumoxidhydroxydhydrat Pural®,
- 12 g Methylhydroxypropylcellulose MHPC 20000 P,
- 210 g 20 %ige Ameisensäure, und
- 6 g Gleitmittel Zusoplast® 126/3.

Zur Bestimmung der Schneidhärte wurde ein Härtemeßgerät Z 010 von Zwick verwendet.

Es wurde ein Formkörper, bestehend aus den beiden genannten Reaktionsmischungen hergestellt. Die Compoundierung der Reaktionsmischungen für den Kern und den Mantel finden in einem mit Sigmaschaufeln bestückten Laborkneter Typ LUK 0,75 von Werner & Pfleiderer statt.

In diesem Fall wurde für die Mantelmasse ein Kolbenextruder und für die Kernmasse ein Einschneckenextruder D = 30 mm verwendet. Die Vorteile des Kolbenextruders sind darin zu sehen, daß aufgrund der Zwangsförderung auch sehr weiche und klebrige Rezepturen verarbeitet werden können und die Extrusionsgeschwindigkeit über den Kolbenvorschub sehr genau einstellbar ist. Um einen dünnen Außenmantel im Bereich von 0,3 bis 0,5 mm zu erhalten, wird die Extrusionsgeschwindigkeit des Kolbenextruders im Vergleich zu der des Einschneckenextruders gering gehalten. Bei der Verarbeitung sollte auf eine ausreichende Kühlung der Verfahrenszonen der Extruder geachtet werden. Die Temperaturen sollten 20°C nicht überschreiten, da sonst das Fließverhalten der Formmassen entscheidend beeinträchtigt werden kann und die Qualität des Formkörpers abfallen kann.

Der solchermaßen hergestellte Formkörper wurde dann im Umluftofen bei 180°C für zwei Stunden getrocknet, wobei er bis zu 15 Vol.-% geschwunden ist. Die anschließende Kalzinierung fand in einem Muffelofen bei 500 bis 800°C statt, wobei Schneidhärten bis 93,8 N erzielt wurden.

### Beispiel 2

In diesem Beispiel wird als Trägermaterial ein Aluminiumoxidpulver Puralox® (von Condea) verwendet. Als Katalysatormasse wird ein PdO/Al₂O₃ Pulver mit 0,5 Gew.-% PdO eingesetzt, welches durch Fällung der Komponenten, Filtration, Anmaischen der Filterpaste und anschließendes Versprühen der Maische hergestellt ist.

Weiterhin wird ein Methylcellulosederivat MHPC 20000 P (von Aqualon) als Plastifiziermittel verwendet. Als Bindemittel wird ein Aluminiumhydroxidhydrat Pural® SB (von Condea) verwendet, das zwischen ca. 300 und 500°C zu γ-Al₂O₃ dehydriert. Weiterer Bestandteil der Reaktionsmischungen ist eine 20 %ige Ameisensäure, die zusätzlich zur Plastifizierung sowie zur Verbesserung der Festigkeit des Bindemittels eingesetzt wird. Für den Mantel wird weiterhin eine Fettsäure mit nichtionischem Emulgator Zusoplast® 126/3 (von Zschimmer & Schwarz) als Gleitmittel verwendet.

Die Reaktionsmischung für die Herstellung des Kerns des erfindungsgemäßen Formkörpers aus porösem Aluminiumoxid beinhaltet
- 150 g Aluminiumoxidpulver Puralox® (von Condea) gemahlen mit einer Partikelgröße von ca. 5 µm,
- 100 g Aluminiumoxidhydroxydhydrat Pural®,
- 7,5 g Methylhydroxypropylcellulose MHPC 20000 P, und
- 170 g 20%ige Ameisensäure.

Die Reaktionsmischung für die Herstellung des Mantels des erfindungsgemäßen Formkörpers aus porösem Aluminiumoxid und Katalysatormaterial beinhaltet
- 130 g Palladiumkatalysator,
- 130 g Aluminiumoxidhydroxydhydrat Pural®,
- 15,6 g Methylhydroxypropylcellulose MHPC 20000 P,
- 230 g 20%ige Ameisensäure und
- 6 g Gleitmittel Zusoplast® 126/3.

Es wurde ein Formkörper, bestehend aus den beiden genannten Reaktionsmischungen hergestellt, wobei die Wanddicke ca. 0,2 mm beträgt.

Die Compoundierung der Reaktionsmischungen für den Kern und den Mantel fanden in einem mit Sigmaschaufeln bestückten Laborkneter Typ LUK 0,75 von Werner & Pfleiderer statt.

In diesem Fall wurde für die Mantelmasse ein Kolbenextruder und für die Kernmasse ein Einschneckenextruder D = 30 mm verwendet. Um den dünnen Außenmantel im Bereich von ca. 0,2 mm zu erhalten, mußte die Extrusionsgeschwindigkeit des Kolbenextruders im Vergleich zu der des Einschneckenextruders sehr gering gehalten werden und die Formmasse des Mantels eine niedere Fließgrenze aufweisen. Weiterhin mußte bei der Verarbeitung auf eine ausreichende Kühlung der Verfahrenszonen der Extruder geachtet werden. Die Temperaturen sollten 20°C nicht überschreiten, da sonst das Fließverhalten der Formmassen beeinträchtigt werden kann und die Qualität des Formkörpers abfallen kann.

Der solchermaßen hergestellte Formkörper wurde bei 20°C (Raumtemperatur) getrocknet, wobei er bis zu 12 Vol.-% geschwunden ist. Die anschließende Kalzinierung fand in einem Muffelofen bei 500° bis 800°C statt, wobei Schneidhärten bis 106 N erzielt wurden.

## Patentansprüche

1. Kern/Mantel-Katalysatorformkörper mit einem Kern aus einem anorganischen Trägermaterial und einem Mantel aus einem katalytisch aktiven Material, herstellbar durch
- Coextrusion einer wässrigen Formmasse, die das Trägermaterial oder einen Vorläufer davon enthält, und einer wässrigen Formmasse, die das katalytisch aktive Material oder einen Vorläufer davon enthält,
- nachfolgendes Trocknen des Coexdrudats und
- nachfolgendes Kalzinieren des getrockneten Coexdrudats.

2. Katalysatorformkörper nach Anspruch 1, **dadurch gekennzeichnet, daß** das katalytisch aktive Material die Hydrierung, Dehydrierung, Oxidation, Isomerisierung oder Polymerisation oder Additions-, Substitutions- oder Eliminierungsreaktionen organischer Stoffe katalysiert und Metalle oder Metallverbindungen der 5. bis 8. Nebengruppe des Periodensystems, der Gruppen IB oder IIB, der Lanthaniden, der Elemente Sn, Pb, As, Sb, Bi, Se oder Te oder Mischungen davon enthält.

3. Katalysatorformkörper nach Anspruch 1 oder 2, **dadurch gekennzeichnet, daß** als Trägermaterial Oxide, Hydroxide oder Carbonate der Elemente B, Al, Ga, Si, Ti, Zr, Zn, Mg oder Ca oder Mischungen davon eingesetzt werden.

4. Katalysatorformkörper nach Anspruch 1 oder 2, **dadurch gekennzeichnet, daß** als Trägermaterial Aktivkohle, Graphit oder anorganische Nitride oder Carbide oder Mischungen davon eingesetzt werden.

5. Katalysatorformkörper nach einem der Ansprüche 1 bis 4, **dadurch gekennzeichnet, daß** die wässrige Formmasse, die das Trägermaterial oder einen Vorläufer davon enthält, ein Gemisch enthält aus
| | |
|---|---|
| 10 bis 30 Gew.-% | mindestens eines wasserlöslichen Bindemittels, |
| 25 bis 50 Gew.-% | mindestens eines anorganischen Trägermaterials oder Vorläufers davon, |
| 2 bis 20 Gew.-% | mindestens eines Peptisierungsmittels, |
| 1 bis 5 Gew.-% | mindestens eines Plastifiziermittels, |
| 20 bis 60 Gew.-% | Wasser, |
wobei die Gesamtmenge der Inhaltsstoffe 100 Gew.-% ergibt.

6. Katalysatorformkörper nach einem der Ansprüche 1 bis 5, **dadurch gekennzeichnet, daß** die wässrige Formmasse, die das katalytisch aktive Material oder einen Vorläufer davon enthält, ein Gemisch enthält aus
| | |
|---|---|
| 10 bis 30 Gew.-% | mindestens eines wasserlöslichen Bindemittels, |
| 0 bis 20 Gew.-% | mindestens eines anorganischen Trägermaterials oder Vorläufers davon |
| 10 bis 40 Gew.-% | mindestens eines katalytisch aktiven Materials oder eines Vorläufers davon, |
| 2 bis 20 Gew.-% | mindestens eines Peptisierungsmittels, |
| 1 bis 5 Gew.-% | mindestens eines Plastifiziermittels, |
| 0,5 bis 2 Gew.-% | mindestens eines Gleitmittels, |
| 20 bis 60 Gew.-% | Wasser, |
wobei die Gesamtmenge der Inhaltsstoffe 100 Gew.-% ergibt.

7. Katalysatorformkörper nach einem der Ansprüche 1 bis 6, **dadurch gekennzeichnet, daß** die zur Herstellung eingesetzten Formmassen im wesentlichen das gleiche Schwindungsverhalten beim Trocknen zeigen.

8. Katalysatorformkörper nach einem der Ansprüche 1 bis 7, **dadurch gekennzeichnet, daß** zur Herstellung einer Anordnung von zwei Extrudern so gewählt wird, daß bei der Extrusion eine Hüllphase aus katalytisch aktivem Material einen kompakten Kern aus Trägermaterial konzentrisch umschließt.

9. Verfahren zur Herstellung eines Kern/Mantel-Katalysatorformkörpers nach einem der Ansprüche 1 bis 8, **dadurch gekennzeichnet, daß** man die angegebenen Verfahrensschritte durchführt.

10. Verwendung eines Kern/Mantel-Katalysatorformkörpers gemäß einem der Ansprüche 1 bis 8 bei der Hydrierung, Dehydrierung, Oxidation, Isomerisierung oder Polymerisation oder Additions-, Substitutions- oder Eliminierungsreaktionen organischer Stoffe.
